(19) Europäisches Patentamt
European Patent Office
Office européen des brevets

(11) **EP 2 775 583 A2**

(12) **EUROPEAN PATENT APPLICATION**

(43) Date of publication:
**10.09.2014 Bulletin 2014/37**

(51) Int Cl.:
***H02J 5/00*** (2006.01)

(21) Application number: **14154829.7**

(22) Date of filing: **12.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.03.2013 JP 2013044387**

(71) Applicant: **Kabushiki Kaisha Toshiba Tokyo 105-8001 (JP)**

(72) Inventors:
• **Yamada, Akiko**
  **Minato-ku Tokyo 105-8001 (JP)**
• **Shijo, Tetsu**
  **Minato-ku Tokyo 105-8001 (JP)**
• **Obayashi, Shuichi**
  **Minato-ku Tokyo 105-8001 (JP)**
• **Shoki, Hiroki**
  **Minato-ku Tokyo 105-8001 (JP)**

(74) Representative: **Granleese, Rhian Jane**
**Marks & Clerk LLP**
**90 Long Acre**
**London WC2E 9RA (GB)**

(54) **Resonator and wireless power transmitting apparatus**

(57) In one embodiment, a resonator includes a magnetic core, a winding wound around the magnetic core, and a parasitic loop element. The parasitic loop element is arranged so as to be interlinked with magnetic field generated by current flowing through the winding. In the parasitic loop element, an amount of flux linkage is adjusted.

F I G. 1

**Description**

FIELD

Embodiments described herein relate generally to a resonator and a wireless power transmitting apparatus.

BACKGROUND

A wireless power transmission system configured to wirelessly transmit electric power by a mutual inductance between a power transmitting coil and a power receiving coil in a noncontact manner has been known. In the wireless power transmission system, there has been a problem in that a self-inductance value changes, a resonant frequency changes, and an electric power transmission efficiency is degraded, due to a distance between coils and misalignment of the coils.

BRIEF DESCRIPTION OF THE DRAWINGS

FIG. 1 is a schematic configuration diagram of a power transmitting apparatus according to a present exemplary embodiment;
FIG. 2 is a perspective view of a resonator according to the present exemplary embodiment;
FIG. 3 is an equivalent circuit diagram of a coil on which a parasitic loop element is arranged;
FIG. 4 is an equivalent circuit diagram of the coil on which the parasitic loop element is arranged;
FIGS. 5A and 5B are diagrams illustrating an example of a magnetic field distribution;
FIG. 6 is a diagram illustrating an arrangement example of the parasitic loop element;
FIG. 7 is a graph illustrating a relation between an arrangement location of the parasitic loop element and a change in an inductance value;
FIG. 8 is a perspective view of a resonator according to a modified example;
FIG. 9 is a side view of a resonator according to a modified example; and
FIG. 10 is a schematic configuration diagram of a power receiving apparatus according to the present exemplary embodiment.

DETAILED DESCRIPTION

In one embodiment, a resonator includes a magnetic core, a winding wound around the magnetic core, and a parasitic loop element. The parasitic loop element is arranged so as to be interlinked with magnetic field generated by current flowing through the winding. In the parasitic loop element, an amount of flux linkage is adjusted.

Embodiments will now be explained with reference to the accompanying drawings.

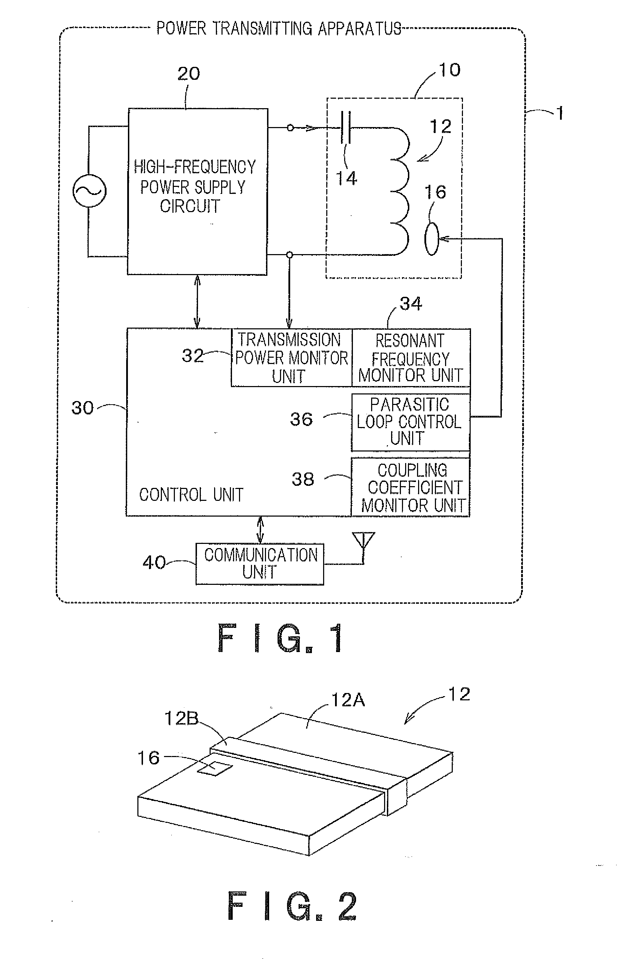

FIG. 1 illustrates a schematic configuration of a power transmitting apparatus according to the present exemplary embodiment. A power transmitting apparatus 1 includes a resonator 10, a high-frequency power supply circuit 20, a control unit 30, and a communication unit 40. The power transmitting apparatus 1 transmits electric power to a power receiving apparatus, by mutual coupling between the resonator 10 and a resonator of the power receiving apparatus (not illustrated). Furthermore, for example, the power transmitting apparatus 1 may include a temperature sensor configured to monitor heating of the power transmitting apparatus 1, a sensor configured to monitor a foreign object by electromagnetic wave radar and ultrasonic wave radar, and a sensor such as an RFID for detecting the position of the resonator of the power receiving apparatus.

The resonator 10 has a coil 12, a capacitor 14, and a parasitic loop element 16. The capacitor 14 may be a parasitic capacitor. The parasitic loop element 16 will be described below. The resonator 10 has a predetermined resonant frequency (= $\omega_0$). The resonant frequency (= $\omega_0$) is determined by an inductance (= $L_1$) of the coil 12 and a capacitance (= $C_1$) of the capacitor 14.

The high-frequency power supply circuit 20 supplies AC power to the resonator 10. The AC power may be supplied via a wiring or may be supplied wirelessly.

The communication unit 40 can communicate with a communication unit (not illustrated) of the power receiving apparatus, and receives the power receiving status and the amount of required power of the power receiving apparatus, or transmits the power transmitting status of the power transmitting apparatus 1.

The control unit 30 has a transmission power monitor unit 32, a resonant frequency monitor unit 34, a parasitic loop control unit 36, and a coupling coefficient monitor unit 38. The transmission power monitor unit 32 has an ammeter, a voltmeter or the like for detecting the power transmission current, voltage, and electric power. The control unit 30 controls the output of the high-frequency power supply circuit 20 based on the power transmitting current, the voltage, and the electric power detected by the transmission power monitor unit 32, or the power receiving current, the voltage, and the electric power of the power receiving apparatus received via the communication unit 40.

The resonant frequency monitor unit 34 determines whether or not the resonator 10 is in the resonant condition. For example, in a series resonant circuit in which a capacitor and a coil are connected in series, the impedance is minimized at the resonant frequency, and the current is maximized. For that reason, by sweeping the output frequency of the high-frequency power supply circuit 20, the frequency at which a current value of an input end of the resonator 10 is maximized can be determined as the resonant frequency. The resonant frequency monitor unit 34 determines whether or not the resonator 10 is in the resonant condition based on the change in the current value of the input end of the resonator 10.

The coupling coefficient monitor unit 38 calculates a coupling coefficient between the resonator 10 and the resonator of the power receiving apparatus. For example, the coupling coefficient monitor unit 38 measures an inductance value $L_{open}$ of the coil 12 when the output end on the power receiving apparatus side is opened, and an inductance value $L_{short}$ of the coil 12 when the output end on the power receiving apparatus side is short-circuited, and calculates the coupling coefficient k using the following Formula 1.

$$[\text{Formula 1}] \quad \mathrm{k} = \sqrt{1 - \frac{L_{short}}{L_{open}}}$$

The parasitic loop control unit 36 controls the parasitic loop element 16 so that the resonant frequency (resonant condition) of the resonator 10, the inductance value, or an LC product becomes a desired value based on the monitoring results of the transmission power monitor unit 32, the resonant frequency monitor unit 34, and the coupling coefficient monitor unit 38, and the power receiving status of the power receiving apparatus received via the communication unit 40. The control of the parasitic loop element 16 will be described below.

FIG. 2 is a perspective view of the coil 12 and the parasitic loop element 16 included in the resonator 10. As illustrated in FIG. 2, the coil 12 includes a magnetic core 12A, and a winding portion 12B that is wound around the magnetic core 12A. As the magnetic core 12A, for example, ferrite can be used. Furthermore, as the winding portion 12B and the parasitic loop element 16, for example, a copper wire can be used.

The parasitic loop element 16 is a parasitic element formed in a loop shape arranged near the coil 12 and on a surface of the magnetic core 12A. For example, as illustrated in FIG. 2, the parasitic loop element 16 is arranged in a peripheral portion of the magnetic core 12A and in the vicinity of the winding portion 12B. The parasitic loop element 16 includes a switch, not illustrated, when the switch is turned on, a loop is formed, and when the switch is turned off, the loop is opened. That is, the loop is opened and closed by turning on/off the switch. The parasitic loop control unit 36 (see FIG. 1) controls turning on-off of the switch. The switch may be a mechanical switch, or may be an electrical switch such as a semiconductor switch.

For example, the power receiving apparatus, not illustrated, includes a power receiving side resonator configured to receive the electric power by mutual inductance between the power receiving apparatus and the resonator 10 of the power transmitting apparatus 1, a rectifier configured to convert AC power received via the power receiving side resonator into DC power, a buck-boost circuit configured to raise and/or lower the voltage based on the operating voltage of the load, a control unit configured to control each portion of the power receiving apparatus, and a communication unit. The communication unit can communicate with the communication unit 40 of the power transmitting apparatus 1, and transmits the power receiving status of the power receiving apparatus or receives the power transmitting status of the power transmitting apparatus 1.

The power receiving side resonator includes a coil and a capacitor, and has a resonant frequency (= $\omega_0$) similar to the resonator 10 of the power transmitting apparatus 1. The resonant frequency (= $\omega_0$) is determined by an inductance (= $L_2$) of the coil of the power receiving side resonator and a capacitance (= $C_2$) of the capacitor. That is, there is a relation of $C_2 L_2 = C_1 L_1$. The power receiving side coil receives AC power from the power transmitting side coil 12 through the coupling with mutual coupling.

The power receiving side resonator may supply AC power to the rectifier via the wiring, and may supply AC power wirelessly. The AC power from the power receiving side resonator may be connected to the rectifier after being boosted and bucked in the buck-boost circuit, and may be boosted and bucked in a DC/DC converter after being converted to DC power by the rectifier.

The load supplied with the DC power from the rectifier or the buck-boost circuit is a load circuit or a battery, and immediately consumes or charges the supplied DC power.

Next, a description will be given of a change in self-inductance value of the coil 12 obtained by placing the parasitic loop element 16 as illustrated in FIG. 2.

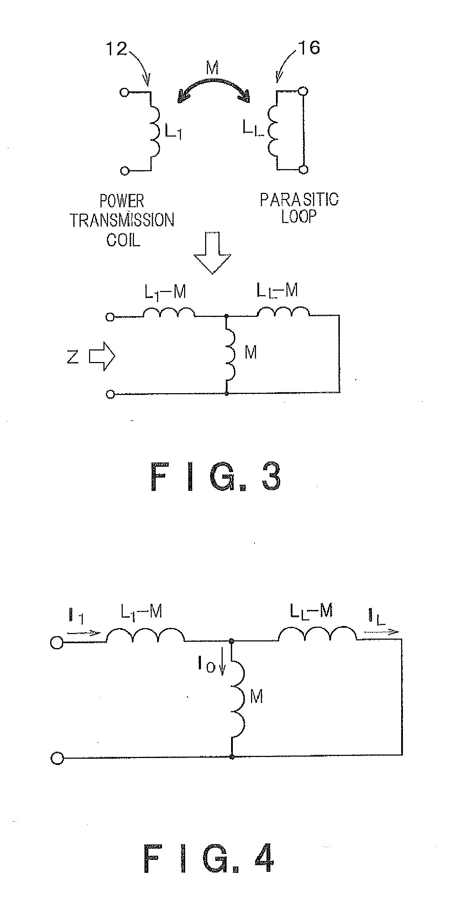

FIG. 3 illustrates an equivalent circuit of the coil 12 on which the parasitic loop element 16 is arranged. Here, a self-inductance value of the coil 12 is assumed to be $L_1$, and a self-inductance value of the parasitic loop element 16 is assumed to be $L_L$. In addition, a mutual inductance generated by magnetically coupling the coil 12 and the parasitic loop element 16 is assumed to be M.

When the parasitic loop element 16 is arranged, an impedance Z of the coil 12 is expressed by the following Formula 2.

$$[\text{Formula 2}]\ Z = j\omega(L_1 - M) + \frac{j\omega M(L_L - M)}{L_L} = j\omega L_1 - \frac{j\omega M^2}{L_L}$$

Furthermore, M is expressed in the following Formula 3. Symbol k is a coupling coefficient between the coil 12 and the parasitic loop element 16.

$$[\text{Formula 3}]\ M = k\sqrt{L_1 L_L}$$

From Formulas 2 and 3, Z is expressed in the following Formula 4.

$$[\text{Formula 4}]\ Z = j\omega(L_1 - k^2 L_L)$$

Accordingly, the self-inductance value of the coil 12 in consideration of the parasitic loop element 16 is expressed in the following Formula 5.

$$[\text{Formula 5}]\ L_1 - k^2 L_L$$

From Formula 5, it is understood that the self-inductance value of the coil 12 is changed by opening and closing the loop of the parasitic loop element 16. Furthermore, it is understood that if the coupling coefficient k increases, it is possible to increase the amount of change in self-inductance value of the coil 12.

In addition, when the current flowing through the parasitic loop element 16 is large, a loss is generated in the parasitic loop element 16 and the switch, and the efficiency is degraded. Therefore, it is preferable to reduce the current flowing through the parasitic loop element 16.

As illustrated in FIG. 4, assuming that the current flowing through the coil 12 is $I_1$, and current flowing through the parasitic loop element 16 is $I_L$, the following Formulas 6-9 hold.

$$[\text{Formula 6}]\ j\omega M I_0 = j\omega(L_L - M)I_L$$

$$[\text{Formula 7}]\ j\omega M(I_1 - I_L) = j\omega(L_L - M)I_L$$

$$[\text{Formula 8}]\ M I_1 = L_L I_L$$

$$[\text{Formula 9}]\ I_L = \frac{M}{L_L} I_1$$

The current $I_L$ flowing through the parasitic loop element 16 is $M/L_L$ times the current $I_1$ flowing through the coil 12. Therefore, when $L_L$ increases, it is possible to reduce the current flowing through the parasitic loop element 16. For example, when the number of winding of the parasitic loop element 16 is assumed to be an N winding, as compared with the case of one winding, the flowing current can be reduced to 1/N.

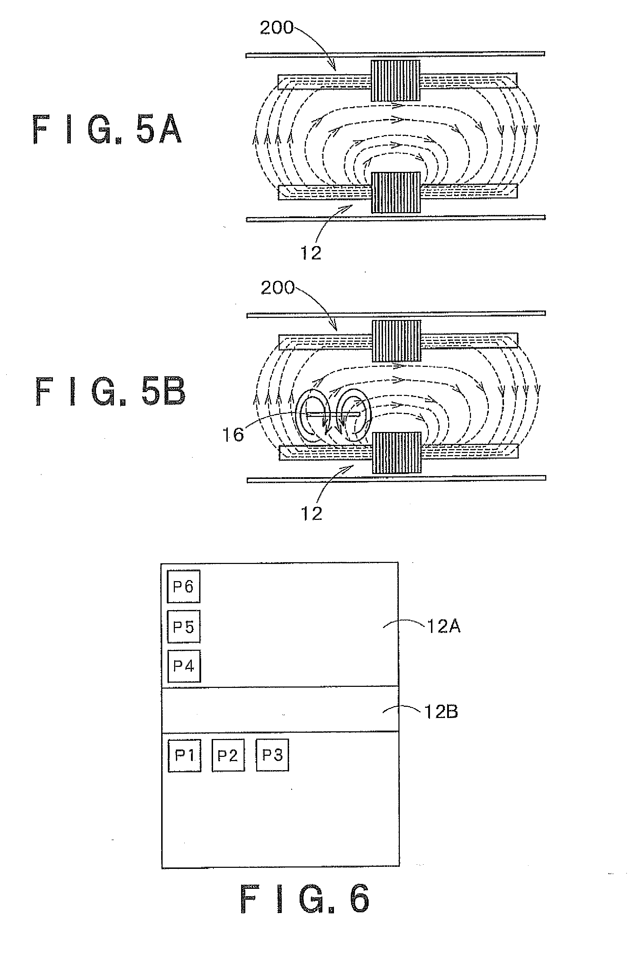

FIG. 5A is an example of the magnetic field distribution when there is no parasitic loop element 16, that is, when the loop is opened by turning off the switch. Furthermore, FIG. 5B is an example of the magnetic field distribution when there is the parasitic loop element 16, that is, when that loop is closed by turning on the switch. For convenience of explanation, the parasitic loop element 16 is illustrated above the coil 12 in FIG. 5B.

As illustrated in FIG. 5B, by placing the parasitic loop element 16 so that the leak flux is interlinked, the magnetic field is canceled within the parasitic loop element 16. Accordingly, the leak inductance value (self-inductance value) of the coil 12 decreases.

For example, when the coil 12 and a power receiving side coil 200 are at predetermined positions, the loop of the parasitic loop element 16 is kept open by turning off the switch. Moreover, when the coil 12 and the power receiving side coil 200 approach to each other or are displaced in each other, the inductance value increases, and the resonant frequency is varied, the loop of the parasitic loop element 16 is closed by turning on the switch. Accordingly, it is possible to reduce the self-inductance value of the coil 12, and maintain the resonant condition.

In addition, the parasitic loop control unit 36 may perform the opening and closing control of the parasitic loop element 16 based on the deviation (a change in resonant condition) of the resonant frequency monitored by the resonant frequency monitor unit 34, and the parasitic loop control unit 36 may perform the opening and closing control of the parasitic loop element 16 by separately preparing tables of the coupling coefficient and the inductance value, and detecting the fluctuation of the inductance value from the monitoring result of the coupling coefficient monitor unit 38.

In this way, according to the present exemplary embodiment, by switching the opening and closing of the parasitic loop element 16 to adjust an amount of flux linkage of the parasitic loop element 16, it is possible to vary the self-inductance value of the coil 12. Accordingly, when the resonant frequency (resonant condition) fluctuates by distance between the transmitting and receiving coils or the misalignment therebetween, it is possible to keep the resonant condition by changing the inductance value of the coil 12, thereby suppressing the degradation of transmission efficiency.

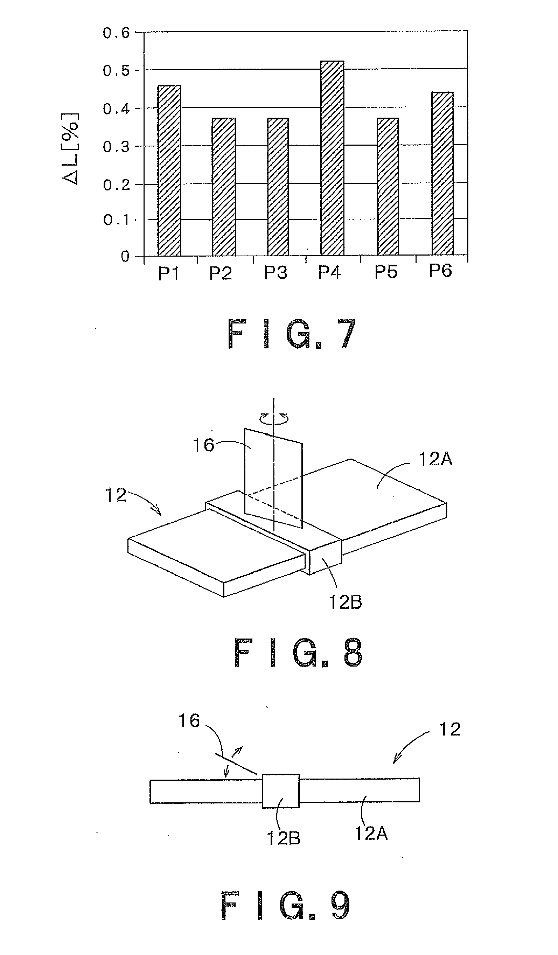

In the above-mentioned exemplary embodiment, although a switch configured to switch the opening and closing of the loop of the parasitic loop element 16 is provided to adjust the amount of the flux linkage by turning on and off the switch, the amount of flux linkage may be adjusted by providing the parasitic loop element 16 so as to be movable on the surface of the magnetic core 12A and by changing the position of the parasitic loop element 16. For example, when the parasitic loop element 16 is arranged at positions P1 to P6 illustrated in FIG. 6, an amount of variation of the inductance value is as illustrated in FIG. 7. Since the flux is concentrated in the peripheral portion of the magnetic core 12A and in the vicinity of the winding, it is understood that a position close to the winding portion 12B has a larger amount of variation of the inductance value than a position far from the winding portion 12B. Furthermore, it is understood that the position close to the peripheral portion of the magnetic core 12A has a larger amount of variation of the inductance value than the position far from the peripheral portion of the magnetic core 12A.

Accordingly, for example, by providing the moving mechanism of the parasitic loop element 16, the parasitic loop element 16 is set to be movable at positions P1, P2, and P3. That is, the parasitic loop element 16 is set to be movable between a central portion of the magnetic core 12A and the peripheral portion (side portion) along the winding portion 12B. The parasitic loop control unit 36 is able to maintain the resonant condition by changing the position of the parasitic loop element 16 based on the deviation of the resonant frequency or the like to vary the inductance value.

Similarly, the parasitic loop element 16 may be set to be movable at the positions P4, P5, and P6. That is, the parasitic loop element 16 may be set to be movable between the central portion and the corner of the magnetic core 12A along the peripheral portion of the magnetic core 12A.

Alternatively, a plurality of the parasitic loop elements 16 including a switch for switching the opening and closing of the loop may be provided on the surface of the magnetic core 12A such that the parasitic loop control unit 36 may control the opening and closing of each of the parasitic loop elements 16.

The plurality of the parasitic loop elements 16 may have the same size, or may have different sizes. By increasing the size of the parasitic loop element 16, it is possible to increase the amount of change in inductance value.

Furthermore, as illustrated in FIG. 8, the parasitic loop element 16 may be arranged on the surface of the magnetic core 12A in the vicinity of the winding portion 12B to be perpendicular to the surface of the magnetic core 12A, and the parasitic loop element 16 may be rotated around the perpendicular line to the surface of the magnetic core 12A. The amount of flux linkage changes by the rotation angle of the parasitic loop element 16, and the resonant condition can be maintained by changing the inductance value. The rotation of the parasitic loop element 16 may be performed, for example, by the use of a motor, not illustrated.

Furthermore, as illustrated in FIG. 9, the parasitic loop element 16 may be arranged obliquely with respect to the surface of the magnetic core 12A, and an inclination angle (an angle formed between the parasitic loop element 16 and the surface of the magnetic core 12A) of the parasitic loop element 16 may be changed. The amount of flux linkage changes by the inclination angle of the parasitic loop element 16, and the resonant condition can be maintained by changing the inductance value. The inclination angle of the parasitic loop element 16 may be adjusted, for example, by the use of a motor (not illustrated).

In the configuration illustrated in FIGS. 8 and 9, by rotating or tilting the parasitic loop element 16 at a position close to the winding portion 12B or in the peripheral portion of the magnetic core 12A, it is possible to increase the change in the amount of flux linkage compared to rotating or tilting the parasitic loop element 16 at the position away from the winding portion 12B and the peripheral portion of the magnetic core 12A. Furthermore, when the parasitic loop element 16 is arranged at the position close to the magnetic core 12A on the surface of the magnetic core 12A, it is possible to increase the change in the amount of flux linkage compared to being arranged at a position away from the magnetic core 12A.

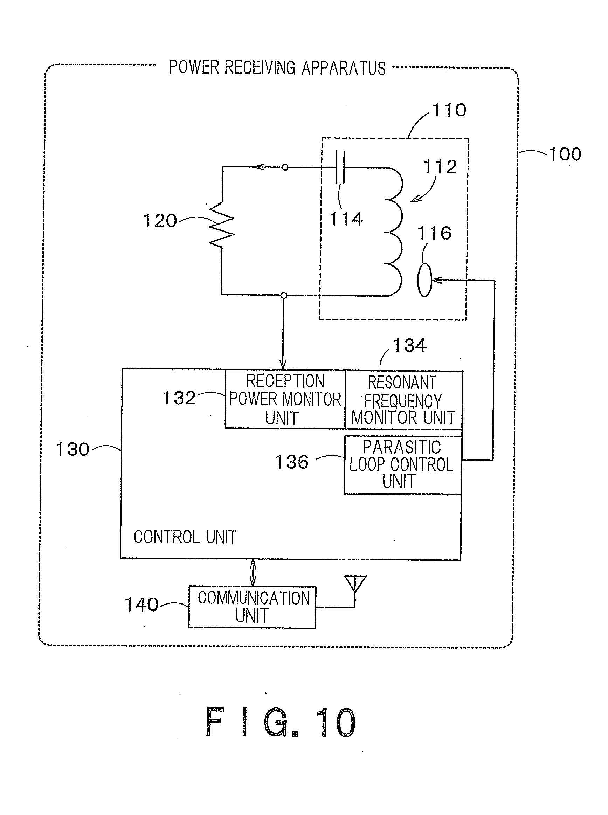

In the above-mentioned embodiment, although an example of providing the parasitic loop element 16 in the resonator 10 of the power transmitting apparatus 1 has been described, as illustrated in FIG. 10, a parasitic loop element 116 may be provided in a resonator 110 of a power receiving apparatus 100. The power receiving apparatus 100 includes the resonator 110, a load 120, a control unit 130, and a communication unit 140. Power is transmitted to the power receiving apparatus 100 from the power transmitting apparatus 1 by mutual coupling between resonator 110 and the resonator 10 (refer to FIG. 1) of the power transmitting apparatus 1.

The resonator 110 has a coil 112, a capacitor 114, and the parasitic loop element 116. The capacitor 114 may be a parasitic capacitor. The load 120 is supplied with the power from the resonator 110.

The communication unit 140 is able to communicate with the communication unit 40 (refer to FIG. 1) of the power transmitting apparatus 1, and receives the transmitting status of the power transmitting apparatus 1 or transmits the receiving status of the power receiving apparatus 100 or the required amount of power.

The control unit 130 has a power receiving monitor unit 132, a resonant frequency monitor unit 134, and a parasitic loop control unit 136. The power receiving monitor unit 132 has a voltmeter, an ammeter or the like for detecting the receiving current, the voltage, and the power. The resonant frequency monitor unit 134 determines whether or not the resonator 110 is in the resonant condition based on the change in the current value of the output end of the resonator 110.

The parasitic loop control unit 136 controls the parasitic loop element 116 based on the monitoring results of the power receiving monitor unit 132 and the resonant frequency monitor unit 134, and the power transmitting status of the power transmitting apparatus 1 received via the communication unit 140 so that the resonant frequency (resonant condition) of the resonator 110, the inductance value, or the LC product is a desired value. A method of controlling the parasitic loop element 116 is similar to the method of controlling the parasitic loop element 16 described above.

By adjusting the amount of flux linkage of the parasitic loop element 116, it is possible to vary the self-inductance value of the coil 112. Accordingly, when the resonant frequency (resonant condition) fluctuates by the distance between the transmitting and receiving coils and the misalignment therebetween, it is possible to keep the resonant condition by changing the inductance value of the coil 112, thereby suppressing the degradation of transmission efficiency.

In the above-mentioned embodiment, although the description has been given of the parasitic loop elements 16, 116 in which the loop is opened or closed by turning on/off of the switch, the element rotates, or the inclination angle changes, a fixed parasitic loop element without opening and closing the loop may be arranged in the vicinity of the magnetic core.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A resonator comprising:

   a magnetic core;
   a winding wound around the magnetic core; and
   a parasitic loop element arranged so as to be interlinked with magnetic field generated by current flowing through the winding, and in which an amount of flux linkage is adjusted.

2. The resonator according to claim 1, further comprising a switch switching opening and closing of a loop of the parasitic loop element.

3. The resonator according to claim 1, wherein the parasitic loop element is arranged on a surface of the magnetic core and rotates around a perpendicular line of the surface of the magnetic core.

4. The resonator according to claim 1, wherein the parasitic loop element is arranged obliquely with respect to the surface of the magnetic core, and an inclination angle with respect to the surface is variable.

5. The resonator according to claim 1,
   wherein a plurality of the parasitic loop elements are arranged on the surface of the magnetic core, and
   each of the parasitic loop elements has a switch that switches the opening and closing of the loop.

6. The resonator according to claim 5, wherein the plurality of the parasitic loop elements include a parasitic loop element having a first size, and a parasitic loop element having a second size different from the first size.

7. The resonator according to claim 1, wherein the parasitic loop element moves on the surface of the magnetic core.

8. The resonator according to claim 7, wherein the parasitic loop element moves between a central portion and a side portion of the magnetic core along the winding.

9. The resonator according to claim 7, wherein the parasitic loop element moves along a peripheral portion of the magnetic core.

10. A wireless power transmitting apparatus comprising:

    a resonator wirelessly transmitting power from a high-frequency power supply with respect to a power receiving apparatus by mutual inductance;
    a communication unit communicating a power transmitting status or a power receiving status to the power receiving apparatus; and
    a control unit detecting transmission power, and controlling the transmission power based on detected result or received information of the communication unit,
    wherein the resonator includes
    a coil including a magnetic core, and a winding wound around the magnetic core, and
    a parasitic loop element arranged so as to be interlinked with magnetic field generated in the coil, and
    the control unit adjusts an amount of flux linkage of the parasitic loop element based on the fluctuation of a resonant frequency of the resonator or the inductance value of the coil.

11. The apparatus according to claim 10, further comprising:

    a switch switching opening and closing of a loop of the parasitic loop element,
    wherein the control unit controls on-off of the switch.

12. The apparatus according to claim 10,
    wherein the parasitic loop element is arranged on a surface of the magnetic core, and
    the control unit rotates the parasitic loop element around a perpendicular line of the surface of the magnetic core.

13. The apparatus according to claim 10,
    wherein the parasitic loop element is arranged obliquely with respect to the surface of the magnetic core, and
    the control unit controls an inclination angle with respect to the surface.

14. The apparatus according to claim 10,
    wherein a plurality of the parasitic loop elements are provided,
    each of the parasitic loop elements has a switch that switches the opening and closing of the loop, and
    the control unit controls on-off of each switch.

15. The apparatus according to claim 14, wherein the plurality of the parasitic loop elements include a parasitic loop element having a first size, and a parasitic loop element having a second size different from the first size.

16. The apparatus according to claim 10,
    wherein the parasitic loop element is provided movably on the surface of the magnetic core, and

the control unit controls positions of the parasitic loop elements.

17. The apparatus according to claim 16, wherein the parasitic loop element moves between a central portion and a side portion of the magnetic core along the winding.

18. The apparatus according to claim 16, wherein the parasitic loop element moves along a peripheral portion of the magnetic core.

POWER TRANSMITTING APPARATUS

HIGH-FREQUENCY POWER SUPPLY CIRCUIT

20

10

12

14

16

1

CONTROL UNIT

30

TRANSMISSION POWER MONITOR UNIT

32

34

RESONANT FREQUENCY MONITOR UNIT

36

PARASITIC LOOP CONTROL UNIT

38

COUPLING COEFFICIENT MONITOR UNIT

40

COMMUNICATION UNIT

F I G. 1

12A

12

12B

16

F I G. 2

F I G. 3

F I G. 4

EP 2 775 583 A2

F I G. 5A

200

12

F I G. 5B

200

16

12

P6

P5

P4

12A

12B

P1 P2 P3

F I G. 6

F I G. 7

F I G. 8

F I G. 9

POWER RECEIVING APPARATUS

110

112

114

116

120

100

134

RECEPTION POWER MONITOR UNIT

132

RESONANT FREQUENCY MONITOR UNIT

PARASITIC LOOP CONTROL UNIT

136

130

CONTROL UNIT

COMMUNICATION UNIT

140

F I G. 10